# EUROPEAN PATENT SPECIFICATION

(11) **EP 3 326 872 B1**
(45) Date of publication and mention of the grant of the patent: **05.06.2019**
(21) Application number: 17382770.0
(22) Date of filing: 14.11.2017
(51) Int. Cl.: B60T 7/10, B60T 11/10, B60T 11/18, B62L 3/02, G05G 1/04, G05G 1/08, F16D 121/04

(54) **PARKING BRAKE FOR A VEHICLE**
FESTSTELLBREMSE FÜR EIN FAHRZEUG
FREIN DE STATIONNEMENT POUR VÉHICULE

(30) Priority: 24.11.2016 ES 201631507
(43) Date of publication of application: 30.05.2018
(73) Proprietor: Seat, S.A., 08760 Martorell - Barcelona (ES)
(72) Inventor: DE MONTSERRAT VALLVÉ, Carles, 08760 MARTORELL (Barcelona) (ES)
(74) Representative: Ponti & Partners, S.L.P

(56) References cited:
- DE-A1-102007 040 293
- JP-A- H09 226 661
- JP-A- 2007 118 738
- US-A1- 2006 071 542
- Anonymous: "Automotive Plumbing Solutions Horizontal & Vertical Hydraulic Handbrake - Lockable | Demon Tweeks", , 16 January 2018 (2018-01-16), XP055441293, Retrieved from the Internet: URL:https://www.demon-tweeks.co.uk/motorsp ort/hydraulic-handbrakes/automotive-plumbi ng-solutions-horizontal-vertical-hydraulic -handbrake-lockable [retrieved on 2018-01-16]
- Anonymous: "OBP Lockable Vertical Hydraulic Handbrake | Demon Tweeks", , 16 January 2018 (2018-01-16), XP055441285, Retrieved from the Internet: URL:https://www.demon-tweeks.co.uk/motorsp ort/hydraulic-handbrakes/obp-lockable-vert ical-hydraulic-handbrake [retrieved on 2018-01-16]

## Description

The present invention refers to a parking brake for a vehicle, for example for a competition vehicle, that enables automatic release when the driver starts the vehicle.

### Background to the invention

Motor vehicles have a parking brake to prevent the motor vehicle from moving accidentally when parked. Conventionally, the parking brake comprises a lever that is actuated by the driver, and the parking brake can be moved to a resting position in which the parking brake is not active, or to a maximum braking position in which the parking brake prevents the motor vehicle from moving. In conventional parking brakes, there is a plurality of intermediate positions that provide different braking intensities.

Nowadays, it is common for parking brakes to be automatic, i.e. parking brakes that move from the maximum braking position to the resting position automatically when the motor vehicle is started. However, the response time of such parking brakes is not suited for use in competition vehicles, which require the start to be as instantaneous as possible.

Competition vehicles usually do not have a parking brake as understood for road vehicles. Parking brakes for competition vehicles are designed to perform the starting function during a race, i.e. to briefly hold the vehicle while the engine is driving the wheels.

Consequently, manual actuation of the parking brake holds the vehicle, and when the handbrake is released the vehicle starts moving suddenly and quickly, thereby improving the start. The switch from the active position to the resting position is achieved using elastic means, which forced the parking brake to remain in the position in which the parking brake is not holding the vehicle. Mechanisms intended to hold the active position of the parking brake are not commonly used.

Devices for locking the parking brake of conventional vehicles are known. For example, document DE102007040293A1 discloses a brake fitting for vehicles with a handlebar, where the brake fitting has a pivotally mounted brake lever with a stop surface. A wedge shaped locking element is provided for the parking brake, which is engageable in the brake position of the brake lever between the brake fitting housing and the brake lever. According to this document, to release the brake, the brake lever is actuated, so that a clamping pressure on a detent plate is eliminated and the detent plate pivots back to a disengaging position. DE102007040293A1 discloses a parking brake for a vehicle according to the preamble of claim 1.

Document EP2746121A1 describes also a handbrake locking device including a rotary locking bar that is actuated by a motor, which may be a step motor. This locking device has the drawback of being complex on account of the need for a motor, of increasing the weight of the vehicle, which is undesirable in competition vehicles, and of complicating a system that needs to be fail-safe.

Consequently, the purpose of the present invention is to provide a parking brake that is suitable for use in competition vehicles, that is simpler, that does not require use of a motor, that provides the driver with greater control over the hand brake, and that ensures that the driver never leaves the parking brake active when executing the starting manoeuvre.

### Description of the invention

The parking brake according to the present invention addresses the drawbacks cited and offers other advantages, as described below.

The parking brake for a vehicle according to the present invention comprises:
- at least one hydraulic system, in which the at least one hydraulic system comprises at least one cylinder, in which the at least one cylinder can be actuated between at least one first position and one second position, and in which the at least one cylinder comprises at least one rod and at least one casing,
- at least one actuator, in which the at least one actuator is coupled to said at least one cylinder such that the at least one actuator is able to change the at least one position of the at least one cylinder, in which the at least one actuator can be actuated between at least one braking position and one resting position, in which the braking position provides a first position of the cylinder,
in which the parking brake comprises at least one retaining means, in which the at least one retaining means can be coupled between the at least one rod and the at least one casing, in which a first position of the at least one cylinder comprises the retaining means coupled to said at least one rod and/or to the at least one casing.

Firstly, it should be noted that "hydraulic system" means a hydraulic cylinder, for example a hydraulic pump, that comprises a rod and a casing. The casing is an external covering in relation to which said rod moves longitudinally. It should also be noted that said casing is rigidly connected to a first shaft and said rod is rigidly connected to a second shaft. The first shaft and the second shaft are anchoring elements for the at least one retaining means.

"Braking position" means the position of the at least one cylinder that results in activation of the braking circuit and consequently activation of at least one brake of the vehicle. Conversely, "resting position" means the position of the at least one cylinder that results in deactivation of the braking circuit, as a result of which the at least one brake of the vehicle is not activated. There is at least one braking position, enabling adjustment of the braking force applied to the wheels of the vehicle.

Preferably, the second position of the at least one cylinder involves the actuator being in the resting position and the at least one retaining means being separated from the at least one rod and/or from the at least one casing.

Furthermore, the hydraulic system can advantageously have at least one elastic means, in which the at least one elastic means is arranged between the at least one rod and the at least one casing, in which the at least one elastic means exerts a traction force between the at least one rod and the at least one casing.

Consequently, this traction force tends to position the at least one cylinder in the second position. According to a preferred embodiment, said elastic means is a helical spring, although said elastic means may be any suitable elastic means that exerts an extending force on the casing and the rod of the cylinder.

The at least one retaining means comprises at least one first joining means, in which the at least one first joining means is joined to the at least one casing. This means that the at least one first joining means forms a static join with the at least one casing, in which the at least one retaining means is rigidly connected to and not separable from the at least one casing via the at least one first joining means. By way of example, the at least one first joining means is attached to the first shaft of the at least one casing, but can alternatively be joined to any element that is rigidly connected to the casing.

Furthermore, the at least one retaining means comprises at least one second joining means, in which the at least one second joining means can be coupled to said at least one rod such that the first position of the at least one cylinder involves the at least one second joining means being coupled to said at least one rod and the second position of the at least one cylinder involves the at least one second joining means being separated from the at least one rod. This provides a moveable join that can be coupled to the rod via the first shaft, or via any element that is rigidly connected to the shaft.

The arrangement described above can be inverted, with the at least one first joining means being couplable to the at least one casing and the at least one second joining means being rigidly connected to the at least one rod.

The at least one rod also advantageously comprises at least one fitting means, in which the at least one fitting means is rigidly connected to said at least one rod, and in which the at least one second joining means can be coupled to said at least one fitting means, providing a stop function and preventing the second joining means from moving accidentally away from the correct position thereof.

The second joining means comprises at least one hook in which the at least one hook can be coupled to said at least one fitting means, in which the at least one hook comprises at least one ramp, in which the at least one ramp touches the at least one fitting means, or the at least one ramp is arranged to facilitate sliding and release of the hook from a second shaft wherein the at least one fitting means are provided. Thus, when the parking brake is in the braking position and the user releases the at least one actuator, the hook disengages from the at least one fitting means such that the at least one hydraulic system moves from the at least one braking position to the resting position, as explained below.

Advantageously, the at least one retaining means comprises at least one O-ring, in which the at least one O-ring is arranged in the join between the first joining means and the at least one casing. This at least one O-ring ensures that the first joining means is held in the correct position and enables a movement or play between the first joining means and the at least one casing, thereby helping the hook to disengage from the at least one fitting means and the at least one hydraulic system moves from the at least one braking position to the resting position.

Furthermore, the at least one retaining means can be deformed in a direction substantially perpendicular to a coupling direction between the second joining means and the at least one rod, thereby enabling the retaining means to be coupled to or separated from the second shaft of the cylinder, enabling the parking brake to move between the different positions of same, as explained below.

The parking brake according to the present invention also preferably comprises at least one holding element, in which the at least one holding element holds the at least one retaining means away from the at least one rod and/or from the least one casing, enabling the parking brake to be held in the resting position of same.

Furthermore, the actuating element can also include a tab at the movable end thereof, to act as a handle or system for facilitating handling of the retaining means by a user.

To adjust the length thereof, the at least one retaining means comprises at least one first plate, at least one second plate and at least one adjustment means between the at least one first plate and the at least one second plate, such that the at least one adjustment means modifies a position of the at least one first plate in relation to the at least one second plate.

To prevent rotation between the first plate and the second plate, the at least one adjustment means comprises at least two screw joins, in which the at least two screw joins are through holes between the at least one first plate and the at least one second plate.

The at least one actuator describes a rotational movement between the at least one maximum braking position and the resting position, this rotation occurring in relation to a static point such as to exert another rotational movement on the hydraulic system. The movement transmission system is very simple and does not require complex technical means.

Operation of the parking brake is as follows, there being three main positions, although the switch between positions is progressive:
Resting position: In the resting position, the elastic means is exerting an extending force on the shafts of the cylinder, and forces the actuator into a forward position (closest to the instrument panel). In this position, the brakes of the vehicle are not activated, and as such no braking force is exerted on the wheels of the vehicle.

Parked position: This is a position in which the hydraulic cylinder induces sufficient pressure in the braking circuit to hold the vehicle, the engine being stopped. This is a parked condition. Consequently, the actuator moves away from the instrument panel slightly, and the elastic means is slightly more compressed. In this position, the at least one retaining means is coupled between the at least one rod and the at least one casing of the at least one cylinder, and more specifically the at least one hook is coupled to the at least one hooking means. Consequently, the action of the hook between the shafts of the cylinder compresses said cylinder, applying a braking force to the wheels that is sufficient to hold the vehicle.

Maximum braking position: The at least one actuator is actuated to the maximum position thereof, i.e. as far away as possible from the instrument panel. In this position, the hydraulic cylinder is compressed to the maximum extent thereof and the pressure induced in the braking circuit to hold the vehicle is maximized. This particular situation is required for a starting situation, for example at the beginning of the race. Considerable braking force is required since the clutch is being released and the accelerator applied, on account of which significant holding force is required in the braking circuit. When the driver releases the actuator, by the action of the elastic means of the cylinder, the brake is released and moves to the resting position thereof, enabling the vehicle to move forwards. The at least one retaining means then needs to be released from the coupled position automatically, in case the driver has forgotten to do so manually. The consequences of failing to release the at least one retaining means would be a very slow start and could result in a rear impact from vehicles that had started correctly.

### Short description of the figures

The attached schematic drawings show a practical embodiment and are provided by way of nonlimiting example to aid comprehension of the foregoing.
Figure 1 is a perspective view of the parking brake according to the present invention,
Figure 2 is an exploded perspective view of the bottom of the parking brake according to the present invention, and
Figure 3 is a schematic plan view of the retaining means showing the transverse movement performed by the retaining means.

### Description of a preferred embodiment

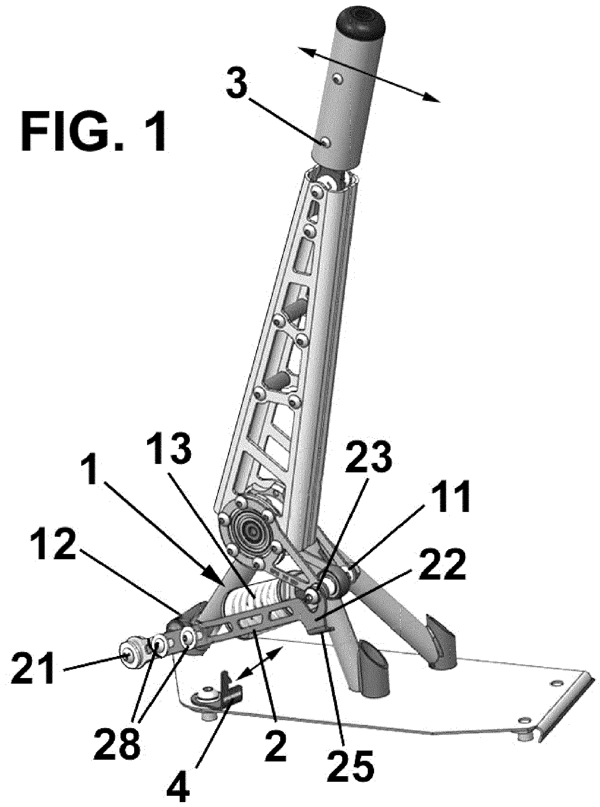

As shown in Figure 1, the parking brake according to the present invention comprises an actuator 3, for example a lever, that is coupled to a cylinder 1, for example a hydraulic pump, that acts on the braking system of a vehicle.

Said cylinder 1 comprises a rod 11, a casing 12 and an elastic means 13, for example a helical spring. Said rod 11 can be moved in relation to the casing 12 against the action of said elastic means 13, as described below.

The parking brake according to the present invention also comprises at least one retaining means 2, for example comprising a first plate 26 and a second plate 27. Said retaining means 2 is intended to hold the cylinder 1 in the park position in which the cylinder applies sufficient pressure in the hydraulic braking circuit 1 to hold the vehicle in a stationary vehicle condition, as explained below.

To do so, the retaining means 2 is joined to the casing 12 by means of a first joining means 21, for example an eyelet receiving a first shaft 120 that is rigidly connected to said casing 12. Furthermore, O-rings 24 are arranged between the first shaft 120 and the first joining means 21.

The retaining means 2 can be coupled to the rod 11 by means of a second joining means 22 that comprises a hook 23 that is coupled to a fitting means 14 provided on a second shaft 110 that is rigidly connected to the rod 11. Said hook 23 is coupled to the fitting means 14 in the parked position and uncoupled from the said fitting means 14 in the maximum braking position when the driver releases the actuator 3, or when the retaining means 2 are released automatically in case the driver has forgotten to do so manually, which are described below.

To adjust the length of the retaining means 2, the retaining means have adjustment means 28, for example formed by two screw joins, in which the screw joins are through holes between the first plate 26 and the second plate 27, in which said screw joins can determine the position of the first and second plates 26, 27 in relation to one another, defining and adjusting the length of the retaining means 2 as a function of the length of the cylinder 1.

Furthermore, the retaining means 2 also comprises a tab 25 that is preferably positioned close to the distal end of the second plate 27. Said tab 25, which projects laterally from the retaining means 2, facilitates actuation by the driver of the vehicle, thereby improving the haptics and handling of the retaining means 2. Advantageously, the tab is oriented towards the driver of the vehicle.

Operation of the parking brake is as follows, bearing in mind that the switch between positions is progressive.

In the resting position, the actuator 3 is in the forwardmost position, i.e. the position closest to the instrument panel of the vehicle.

In this resting position, the retaining means 2 can be coupled to the holding element 4, as shown schematically by depicted arrows in Figure 1. In this position, the at least one retaining means 2 is not acting on the cylinder 1. Conversely, same is attached to the holding element 4 and as such cannot move freely or cause any noise by contact with other nearby components during movement of the vehicle. More specifically, given that the retaining means is released from the cylinder, the elastic means 13 exerts an extending force that is not opposed by any other element, such that the rod 11 is in the most advanced position thereof, i.e. in the position that projects most from the casing 12 of the cylinder 1. As mentioned previously, the brakes of the vehicle are not acted upon in this resting position of the retaining means 2.

To actuate the parking brake, the actuator 3 moves away from the instrument panel slightly and the elastic means 13 is compressed in proportion with the movement of the actuator 3. This position is defined as the parked position, and the parking brake induces sufficient pressure in the braking circuit to hold the vehicle. This is a parked or stationary vehicle condition.

In this parked position, the hook 23 is coupled to the fitting means 14 and holds the cylinder 1, slightly compressing the elastic means 13 and applying sufficient braking force on the rear wheels of the vehicle to hold the vehicle.

There is a third maximum braking position that is for example used when the driver wishes to start the vehicle at the beginning of a race. The parking brake is positioned in the maximum braking position, which is the position furthest away from the instrument panel. In this position, the elastic means 13 is compressed and the cylinder 1 causes the hydraulic braking circuit to maximize the hold of the vehicle by the brakes.

When the actuator 3 is in the maximum braking position, the driver releases the clutch and presses the accelerator, which requires a high holding force in the braking circuit. When the driver releases the actuator 3, by the action of the elastic means 13 of the cylinder, the brake is released, i.e. the hook 23 is uncoupled from the fitting means 14 and moves to the resting position thereof, enabling the vehicle to move forwards.

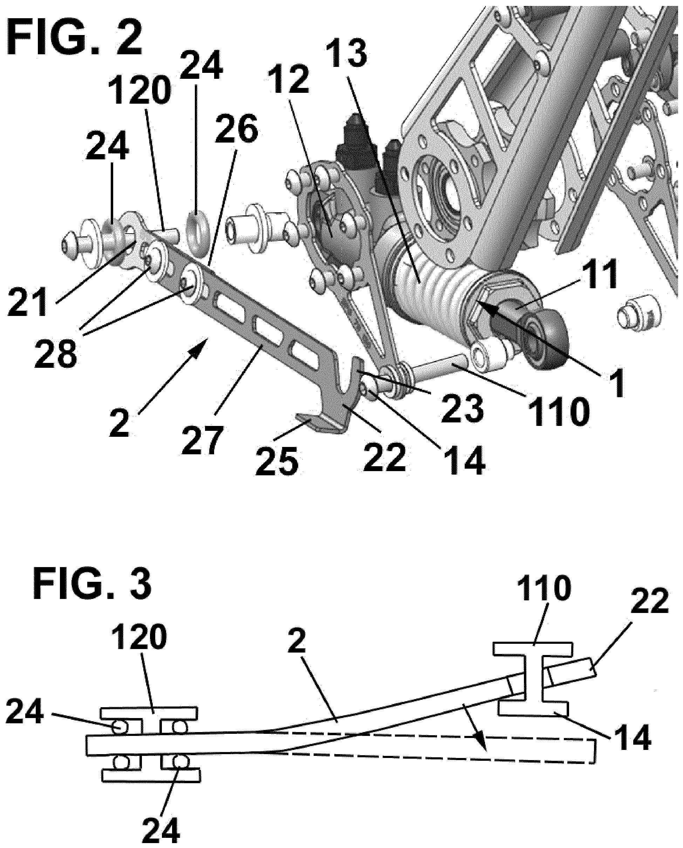

Figure 3 is a schematic plan view of the transverse movement performed by the retaining means 2 during operation of the parking brake according to the present invention.

As shown in Figure 3, the retaining means 2 is attached at a first end to the first shaft 120 by means of the O-rings 24, while the other retaining end 2 can be moved as indicated by the dashed line and as described below. The dashed line symbolizes a position of the retaining means 2 once removed from the second shaft 110, on account of which the elastic means 13 of the cylinder is not opposed by the at least one retaining means 2, the braking circuit switching from exerting a pressure on the brakes of the vehicle to a situation in which no pressure is exerted on said brakes.

As mentioned previously, in the parked position, the hook 23 of the second joining means 22 is coupled to the fitting means 14 of the second shaft 110 and holds the cylinder 1, as shown in Figure 3 with the retaining means 2 shown using an unbroken line.

The movement of said retaining means 2 from this position in which the retaining means is coupled to the second shaft 110 to the position shown using the dashed line occurs when the driver actuates the actuator 3 from the parked position to the maximum braking position. Thus, the hook 23 of the second joining means 22 is uncoupled from the fitting means 14 and moves to the resting position thereof (shown using the dashed line), eliminating the pressure on the braking circuit and enabling the vehicle to move forwards.

At least three main factors enable this release of the retaining means 2 from the at least one casing 12 and/or from the at least one rod 11:
- The shape of the hook 23, which comprises a ramp that facilitates sliding and release of the hook 23 from the second shaft 110.
- The at least one O-ring 24, which facilitates the lateral bending of the at least one retaining means 2 such that the position in which the at least one retaining means 2 is coupled to the at least one casing 12 and to the at least one rod 11, is a forced position and not an resting position.
- The lateral bending of the at least one retaining means 2, which enables the user to bend same in order to position same in the coupled position with the at least one casing 12 and/or the at least one rod 11, generating internal forces in the at least one retaining means 2 that tend to release same from the coupled position.

Thus, the retaining means 2 is released automatically, in case the driver has forgotten to do so manually, thereby preventing a very slow start that could result in a rear impact from vehicles that had started correctly.

Although reference has been made to a specific embodiment of the invention, it is obvious for a person skilled in the art that numerous variations and modifications may be made to the parking brake described, and that all of the details mentioned may be replaced by other technically equivalent details without thereby moving outside the scope of protection defined by the attached claims.

## Claims

1. Parking brake for a vehicle, in which the parking brake comprises:
- at least one hydraulic system, in which the at least one hydraulic system comprises at least one cylinder (1), in which the at least one cylinder (1) can be actuated between at least one first position and one second position, and in which the at least one cylinder (1) comprises at least one rod (11) and at least one casing (12),
- at least one actuator (3), in which the at least one actuator (3) is coupled to the at least one cylinder (1) such that the at least one actuator (3) is able to change the at least one position of the at least one cylinder (1), in which the at least one actuator (3) can be actuated between at least one braking position and one resting position, in which the braking position provides a first position of the cylinder (1),
- wherein the parking brake comprises at least one retaining means (2), in which the at least one retaining means (2) can be coupled between the at least one rod (11) and the at least one casing (12), in which a first position of the at least one cylinder (1) comprises the retaining means (2) coupled to the at least one rod (11) and/or to the at least one casing (12),
- wherein the at least one retaining means (2) comprises at least one second joining means (22), in which the at least one second joining means (22) can be coupled to the at least one rod (11) such that the first position of the at least one cylinder (1) involves the at least one second joining means (22) being coupled to the at least one rod (11) and the second position of the at least one cylinder (1) involves the at least one second joining means (22) being separated from the at least one rod (11),
**characterized in that:**
- the at least one retaining means (2) can be deformed in a direction substantially perpendicular to a coupling direction between the second joining means (22) and the at least one rod (11),
- wherein said at least one rod (11) comprises at least one fitting means (14), in which the at least one fitting means (14) is rigidly connected to the at least one rod (11), and in which the at least one second joining means (22) can be coupled to the at least one fitting means (14),
- wherein the second joining means (22) comprises at least one hook (23), in which the at least one hook (23) can be coupled to the at least one fitting means (14) and wherein the at least one hook (23) comprises at least one ramp arranged to facilitate sliding and release of the hook (23) from the at least one fitting means (14) when the driver releases the at least one actuator (3).

2. Parking brake for a vehicle according to Claim 1, **characterized in that** the second position of the at least one cylinder (1) comprises the actuator (3) being in the resting position and the at least one retaining means (2) being separated from the at least one rod (11) and/or from the at least one casing (12).

3. Parking brake for a vehicle according to Claim 1, **characterized in that** the at least one hydraulic system comprises at least one elastic means (13), in which the at least one elastic means (13) is arranged between the at least one rod (11) and the at least one casing (12), in which the at least one elastic means (13) exerts a traction force between the at least one rod (11) and the at least one casing (12).

4. Parking brake for a vehicle according to Claim 1, **characterized in that** the at least one retaining means (2) comprises at least one first joining means (21), in which the at least one first joining means (21) is joined to the at least one casing (12).

5. Parking brake for a vehicle according to Claim 4, **characterized in that** the at least one retaining means (2) comprises at least one O-ring (24), in which the at least one O-ring (24) is arranged in the join between the first joining means (21) and the at least one casing (12).

6. Parking brake for a vehicle according to Claim 1, **characterized in that** it comprises at least one holding element (4), in which the at least one holding element (4) holds the at least one retaining means (2) away from the at least one rod (11) and/or from the least one casing (12).

7. Parking brake for a vehicle according to Claim 1, **characterized in that** the at least one retaining means (2) comprises at least one first plate (26), at least one second plate (27) and at least one adjustment means (28) between the at least one first plate (26) and the at least one second plate (27), such that the at least one adjustment means (28) changes a position of the at least one first plate (26) in relation to the at least one second plate (27).

8. Parking brake for a vehicle according to Claim 7, **characterized in that** the at least one adjustment means (28) comprises at least two screw joins, in which the at least two screw joins are through holes between the at least one first plate (26) and the at least one second plate (27).

9. Parking brake for a vehicle according to Claim 1, **characterized in that** the at least one actuator (3) provides a rotational movement between the at least one maximum braking position and the resting position.

## Patentansprüche

1. Parkbremse für ein Fahrzeug, wobei die Parkbremse umfasst:
- wenigstens ein Hydrauliksystem, wobei das wenigstens eine Hydrauliksystem wenigstens einen Zylinder (1) umfasst, wobei der wenigstens eine Zylinder (1) wenigstens zwischen einer ersten Position und einer zweiten Position betätigt werden kann und wobei der wenigstens eine Zylinder (1) wenigstens eine Stange (11) und wenigstens ein Gehäuse (12) aufweist,
- wenigstens einen Aktor (3), wobei der wenigstens eine Aktor (3) mit dem wenigstens einen Zylinder (1) so gekoppelt ist, dass der wenigstens eine Aktor (3) die wenigstens eine Position des wenigstens einen Zylinders (1) ändern kann, wobei der wenigstens eine Aktor (3) zwischen wenigstens einer Bremsposition und einer Ruheposition betätigt werden kann, wobei die Bremsposition eine erste Position des Zylinders (1) bereitstellt,
- wobei die Parkbremse wenigstens ein Rückhaltemittel (2) umfasst, wobei das wenigstens eine Rückhaltemittel (2) zwischen die wenigstens eine Stange (11) und das wenigstens eine Gehäuse (12) gekoppelt werden kann, wobei eine erste Position des wenigstens einen Zylinders (1) das mit der wenigstens einen Stange (11) und/oder dem wenigstens einen Gehäuse (12) gekoppelte Rückhaltemittel (2) aufweist,
- wobei das wenigstens eine Rückhaltemittel (2) wenigstens ein zweites Verbindungsmittel (22) aufweist, wobei das wenigstens eine zweite Verbindungsmittel (22) mit der wenigstens einen Stange (11) so gekoppelt werden kann, dass in der ersten Position des wenigstens einen Zylinders (1) das wenigstens eine zweite Verbindungsmittel (22) mit der wenigstens einen Stange (11) gekoppelt ist und in der zweiten Position des wenigstens einen Zylinders (1) das wenigstens eine zweite Verbindungsmittel (22) von der wenigstens einen Stange (11) getrennt ist,
**dadurch gekennzeichnet, dass**
- das wenigstens eine Rückhaltemittel (2) in einer Richtung im Wesentlichen senkrecht zu einer Kopplungsrichtung zwischen dem zweiten Verbindungsmittel (22) und der wenigstens einen Stange (11) verformt werden kann,
- wobei die wenigstens eine Stange (11) wenigstens ein Anbringungsmittel (14) umfasst, wobei das wenigstens eine Anbringungsmittel (14) mit der wenigstens einen Stange (11) starr verbunden ist und wobei das wenigstens eine zweite Verbindungsmittel (22) mit dem wenigstens einen Anbringungsmittel (14) gekoppelt werden kann,
- wobei das zweite Verbindungsmittel (22) wenigstens einen Haken (23) umfasst, wobei der wenigstens eine Haken (23) mit dem wenigstens einen Anbringungsmittel (14) gekoppelt werden kann und wobei der wenigstens eine Haken (23) wenigstens eine Rampe aufweist, die dafür ausgelegt ist, das Gleiten und Freigeben des Hakens (23) von dem wenigstens einen Anbringungsmittel (14) zu erleichtern, wenn der Fahrer den wenigstens einen Aktor (3) freigibt.

2. Parkbremse für ein Fahrzeug nach Anspruch 1, **dadurch gekennzeichnet, dass** in der zweiten Position des wenigstens einen Zylinders (1) der Aktor (3) in der Ruheposition ist und das wenigstens eine Rückhaltemittel (2) von der wenigstens einen Stange (11) und/oder von dem wenigstens einen Gehäuse (12) getrennt ist.

3. Parkbremse für ein Fahrzeug nach Anspruch 1, **dadurch gekennzeichnet, dass** das wenigstens eine Hydrauliksystem wenigstens ein elastisches Mittel (13) umfasst, wobei das wenigstens eine elastische Mittel (13) zwischen der wenigstens einen Stange (11) und dem wenigstens einen Gehäuse (12) angeordnet ist, wobei das wenigstens eine elastische Mittel (13) zwischen der wenigstens einen Stange (11) und dem wenigstens einen Gehäuse (12) eine Zugkraft ausübt.

4. Parkbremse für ein Fahrzeug nach Anspruch 1, **dadurch gekennzeichnet, dass** das wenigstens eine Rückhaltemittel (2) wenigstens ein erstes Verbindungsmittel (21) umfasst, wobei das wenigstens eine erste Verbindungsmittel (21) mit dem wenigstens einen Gehäuse (12) verbunden ist.

5. Parkbremse für ein Fahrzeug nach Anspruch 4, **dadurch gekennzeichnet, dass** das wenigstens eine Rückhaltemittel (2) wenigstens einen O-Ring (24) umfasst, wobei der wenigstens eine O-Ring (24) in der Verbindung zwischen dem ersten Verbindungsmittel (21) und dem ersten Gehäuse (12) angeordnet ist.

6. Parkbremse für ein Fahrzeug nach Anspruch 1, **dadurch gekennzeichnet**, das sie wenigstens ein Halteelement (4) umfasst, wobei das wenigstens eine Halteelement (4) das wenigstens eine Rückhaltemittel (2) beabstandet von der wenigstens einen Stange (11) und/oder von dem wenigstens einen Gehäuse (12) hält.

7. Parkbremse für ein Fahrzeug nach Anspruch 1, **dadurch gekennzeichnet, dass** das wenigstens eine Rückhaltemittel (2) wenigstens eine erste Platte (26), wenigstens eine zweite Platte (27) und wenigstens ein Einstellmittel (28) zwischen der wenigstens einen ersten Platte (26) und der wenigstens einen zweiten Platte (27) umfasst, so dass das wenigstens eine Einstellmittel (28) eine Position der wenigstens einen ersten Platte (26) in Bezug auf die wenigstens eine zweite Platte (27) ändert.

8. Parkbremse für ein Fahrzeug nach Anspruch 7, **dadurch gekennzeichnet, dass** das wenigstens eine Einstellmittel (28) wenigstens zwei Schraubverbindungen umfasst, wobei die wenigstens zwei Schraubverbindungen Durchgangslöcher zwischen der wenigstens einen ersten Platte (26) und der wenigstens einen zweiten Platte (27) sind.

9. Parkbremse für ein Fahrzeug nach Anspruch 1, **dadurch gekennzeichnet, dass** der wenigstens eine Aktor (3) eine Drehbewegung zwischen der wenigstens einen maximalen Bremsposition und der Ruheposition bereitstellt.

## Revendications

1. Frein de stationnement d'un véhicule, le frein de stationnement comprenant :
- au moins un système hydraulique, l'au moins un système hydraulique comprenant au moins un cylindre (1), dans lequel le ou les cylindres (1) peuvent être actionnés entre au moins une première position et une seconde position, et dans lequel le ou les cylindres (1) comprennent au moins une tige (11) et au moins une enveloppe (12),
- au moins un actionneur (3), le ou les actionneurs (3) étant accouplés au ou aux cylindres (1), de telle sorte que le ou les actionneurs (3) puissent modifier la ou les positions du ou des cylindres (1), le ou les actionneurs (3) pouvant être actionnés entre au moins une position de freinage et une position de repos, la position de freinage fournissant une première position du cylindre (1),
- où le frein de stationnement comprend des moyens de retenue (2), les moyens de retenue (2) pouvant être accouplés entre la ou les tiges (11) et la ou les enveloppes (12), une première position du ou des cylindres (1) comprenant les moyens de retenue (2) accouplés à la ou aux tiges (11) et / ou à l'enveloppe ou aux enveloppes (12),
- où les moyens de retenue (2) comprennent des seconds moyens de jonction (22), les seconds moyens de jonction (22) pouvant être accouplés à la ou aux tiges (11), de telle sorte que la première position du ou des cylindres (1) implique l'accouplement des seconds moyens de jonction (22) à la ou aux tiges (11), et la seconde position du ou des cylindres (1) implique la séparation des seconds moyens de jonction (22) de la ou des tiges (11),
**caractérisé en ce que** :
- les moyens de retenue (2) peuvent être déformés dans une direction sensiblement perpendiculaire à une direction d'accouplement entre les seconds moyens de jonction (22) et la ou les tiges (11),
- où ladite ou lesdites tiges (11) comprennent des moyens de montage (14), les moyens de montage (14) étant connectés rigidement à la ou aux tiges (11), et les seconds moyens de jonction (22) pouvant être accouplés aux moyens de montage (14),
- où les seconds moyens de jonction (22) comprennent au moins un crochet (23), le ou les crochets (23) pouvant être accouplés aux moyens de montage (14), et le ou les crochets (23) comprenant au moins une rampe agencée pour faciliter le glissement et la libération du crochet (23) des moyens de montage (14) lorsque le conducteur libère le ou les actionneurs (3).

2. Frein de stationnement d'un véhicule selon la revendication 1, **caractérisé en ce que** la seconde position du ou des cylindres (1) comprend l'actionneur (3) dans la position de repos, et les moyens de retenue (2) séparés de la ou des tiges (11) et / ou de l'enveloppe ou des enveloppes (12).

3. Frein de stationnement d'un véhicule selon la revendication 1, **caractérisé en ce que** le ou les systèmes hydrauliques comprennent des moyens élastiques (13), les moyens élastiques (13) étant agencés entre la ou les tiges (11) et l'enveloppe ou les enveloppes (12), les moyens élastiques (13) exerçant une force de traction entre la ou les tiges (11) et l'enveloppe ou les enveloppes (12).

4. Frein de stationnement d'un véhicule selon la revendication 1, **caractérisé en ce que** les moyens de retenue (2) comprennent au moins des premiers moyens de jonction (21), les premiers moyens de jonction (21) étant joints à l'enveloppe ou aux enveloppes (12).

5. Frein de stationnement d'un véhicule selon la revendication 4, **caractérisé en ce que** les moyens de retenue (2) comprennent au moins un joint torique (24), le ou les joints toriques (24) étant agencés dans la jonction entre les premiers moyens de jonction (21) et l'enveloppe ou les enveloppes (12).

6. Frein de stationnement d'un véhicule selon la revendication 1, **caractérisé en ce qu'**il comprend au moins un élément de maintien (4), le ou les éléments de maintien (4) maintenant les moyens de retenue (2) à l'écart de la ou des tiges (11) et / ou de l'enveloppe ou des enveloppes (12).

7. Frein de stationnement d'un véhicule selon la revendication 1, **caractérisé en ce que** les moyens de retenue (2) comprennent au moins une première plaque (26), au moins une deuxième plaque (27) et au moins des moyens de réglage (28) entre la ou les premières plaques (26) et la ou les deuxièmes plaques (27), de telle sorte que les moyens de réglage (28) modifient la position de la ou des premières plaques (26) par rapport à la ou aux deuxièmes plaques (27).

8. Frein de stationnement d'un véhicule selon la revendication 7, **caractérisé en ce que** les moyens de réglage (28) comprennent au moins deux jonctions à vis, les deux jonctions à vis au moins se situant dans des trous traversants entre la ou les premières plaques (26) et la ou les deuxièmes plaques (27).

9. Frein de stationnement d'un véhicule selon la revendication 1, **caractérisé en ce que** le ou les actionneurs (3) fournissent un déplacement en rotation entre la ou les positions de freinage maximum et position de repos.
